(19) Europäisches Patentamt
European Patent Office
Office européen des brevets

(11) EP 0 668 324 B1

(12) **EUROPÄISCHE PATENTSCHRIFT**

(45) Veröffentlichungstag und Bekanntmachung des Hinweises auf die Patenterteilung:
**22.09.1999 Patentblatt 1999/38**

(21) Anmeldenummer: **95101988.4**

(22) Anmeldetag: **14.02.1995**

(51) Int Cl.[6]: **C08L 81/06**, C08L 81/02, C08L 81/00
// (C08L81/06, 81:02, 81:00), (C08L81/02, 81:06, 81:00), (C08L81/00, 81:02, 81:06)

(54) **Mischungen aus Polyarylensulfonen mit Polyarylensulfoxiden und Polyarylensulfiden**

Blends of polyarylenesulfones with polyarylene-sulfoxides and polyarylenesulfides

Mélanges de polyarylènesulfones avec des polyarylènesulfoxydes et des polyarylènesulfures

(84) Benannte Vertragsstaaten:
**DE FR GB**

(30) Priorität: **22.02.1994 DE 4405536**

(43) Veröffentlichungstag der Anmeldung:
**23.08.1995 Patentblatt 1995/34**

(73) Patentinhaber: **Ticona GmbH**
**65451 Kelsterbach (DE)**

(72) Erfinder:
- **Scheckenbach, Helmut, Dl.**
  **D-63225 Langen (DE)**
- **Schleicher, Andreas, Dr.**
  **D-64683 Einhausen (DE)**
- **Kulpe, Jürgen, Dr.**
  **D-65929 Frankfurt (DE)**

(56) Entgegenhaltungen:
**EP-A- 0 266 791**
**EP-A- 0 268 765**
**EP-A- 0 388 969**
**DE-A- 4 314 738**
**GB-A- 1 234 008**

- **PATENT ABSTRACTS OF JAPAN vol. 004, no. 129 (C-024), 10.September 1980 & JP-A-55 082130 (TORAY IND INC), 20.Juni 1980,**
- **POLYMER BULLETIN, Bd. 26, Nr. 3, 1.August 1991, Seiten 349-356, XP000237480 CHEUNG M F ET AL: "TENSILE FRACTURE MORPHOLOGY OF POLYSULFONE-POLY(PHENYLENE SULFIDE) BLENDS"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 668 324 B1

Printed by Jouve, 75001 PARIS (FR)

## Beschreibung

Die Erfindung betrifft binäre und ternäre Mischungen aus thermoplastisch nicht verarbeitbaren Polyarylensulfonen mit Polyarylensulfoxiden und Polyarylensulfiden und daraus hergestellte Formkörper.

Polyarylensulfone sind seit längerer Zeit bekannt. Ihre Herstellung ist in zahlreichen Patentschriften (GB-A 1 365 486, DE-A 1 938 806, JP-Sho 63-210130, noch nicht veröffentlichte deutsche Patentanmeldung P 43 14 738.0 "Verfahren zur Oxidation von Thioethergruppen enthaltenden Polyarylenverbindungen" vom 4. Mai 1993) und Veröffentlichungen (Gabler et al. Chimia, 28, (1974), 567) beschrieben.

Ebenfalls bekannt sind Mischungen aus Fluorpolymeren und oxidierten Polyarylensulfiden. Die oxidierten Polyarylensulfide führen hierbei zu einem verbesserten Abriebverhalten und einer reduzierten Kriechneigung der Fluorpolymere (noch nicht veröffentlichte deutsche Patentanmeldungen vom 10. Juli 1993 P 43 23 181.0 "Mischungen aus Fluorpolymeren und oxidierten Polyarylensulfiden" und P 43 23 121.7 "Abriebbeständige Fluorpolymer-Mischungen").

Polyarylensulfone sind außergewöhnlich temperaturbeständige Polymere. Aufgrund ihrer chemischen Struktur besitzen sie im allgemeinen eine inhärente Flammwidrigkeit.

Teilkristalline Polyarylensulfone sind jedoch aufgrund ihres hohen Schmelzpunktes (z.B. Polyphenylensulfon: Tm = 520°C) dann thermoplastisch nicht verarbeitbar, wenn die Polymere bei Verarbeitungstemperaturen oberhalb ihres Schmelzpunktes thermisch nicht stabil sind. Solche Polyarylensulfone lassen sich auch durch Heißpressen oder im Transfer Moulding Verfahren nur sehr schwer verarbeiten.

Temperaturen oberhalb der Glasübergangstemperatur (z.B. Polyphenylensulfon: Tg = 350°C) führen bei diesen Verfahren zwar zu einem Verschmelzen der amorphen Anteile, doch sind diese besonders bei größeren oder komplizierteren Formkörpern nicht homogen plastifiziert, was unter anderem durch Rißbildung innerhalb der Formkörper zum Ausdruck kommt.

Es bestand daher die Aufgabe, die genannten Nachteile zu verringern bzw. zu vermeiden.

Die Erfindung betrifft daher Polymermischungen aus

(A) mindestens einem thermoplastisch nicht verarbeitbaren Polyarylensulfon mit einem Anteil von 33 bis 99 Gew.-%,
(B) mindestens einem Polyarylensulfoxid mit einem Anteil von 1 bis 67 Gew.-%, vorzugsweise 5 bis 50 Gew.-%, insbesondere 15 bis 40 Gew.-% und/oder
(C) mindestens einem Polyarylensulfid mit einem Anteil von 1 bis 67 Gew.-%, vorzugsweise 1 bis 40 Gew.-%, insbesondere 1 bis 25 Gew.-%

wobei die Summe der Komponenten (A), (B) und/oder (C) stets 100 Gew.-% beträgt.

Es wurde gefunden, daß sich die thermoplastisch nicht verarbeitbaren Polyarylensulfone durch Zusatz von Polyarylensulfoxiden und/oder Polyarylensulfiden zu homogenen Formteilen verarbeiten lassen. Es trifft unter anderem der überraschende Effekt auf, daß z.B. ein kaltgepreßter Formkörper aus einem Polyarylensulfon mit beispielsweise Polyphenylensulfid als Zusatzkomponente selbst bei Temperaturen von über 360°C nicht aufschmilzt, obwohl Polyphenylensulfid eine Schmelztemperatur von 280 bis 290°C besitzt. Desweiteren wurde festgestellt, daß nach der Verarbeitung der Polymermischungen nur noch die Glasübergangstemperatur des Polyarylensulfons bei Thermoanalysen auftritt. Dies zeigt an, daß die ursprünglich heterogene Polymermischung durch den Verarbeitungsprozeß zu einer physikalisch-chemisch homogenen Polymermasse umgewandelt wurde.

Verwendbare thermoplastisch nicht verarbeitbare Polyarylensulfone (A) für die Mischungen gemäß der Erfindung sind lineare und/oder verzweigte Polyarylene (Mw: 4 000 - 200 000) mit wiederkehrenden Einheiten der Formel (I):

$$[\text{-(-E-S-)}_a\text{-(E-SO}_2\text{-)}_b\text{-}] \qquad (I)$$

in der E unabhängig voneinander für einfache oder direkt über para,- meta-oder orthoverknüpfte Arylensysteme mit 6 bis 18 C-Atomen steht, und vorzugsweise Phenylen, Naphthylen oder Biphenylen darstellt, wobei die Summe aus a + b gleich 1 ist, mit der Maßgabe, daß b stets $\geq$ 0,65 ist.

Besonders geeignet sind lineare und verzweigte Polyphenylene (Mw: 4 000-200 000) mit wiederkehrenden Einheiten der Formel (II):

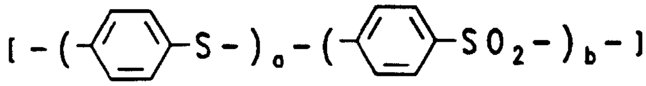 (II)

wobei a und b die oben bezeichneten Werte haben.

Die Herstellung der thermoplastisch nicht verarbeitbaren Polyarylensulfone (A) kann nach dem in der oben zitierten, noch nicht veröffentlichten deutschen Patentanmeldung P 43 14 738.0, "Verfahren zur Oxidation von Thioethergruppen enthaltenden Polyarylenverbindungen" vom 4. Mai 1993, beschriebenen Verfahren erfolgen, auf das hiermit Bezug genommen wird.

Verwendbare Polyarylensulfoxide (B) für die Mischungen gemäß der Erfindung sind lineare und/oder verzweigte Polyarylene (Mw: 4 000 - 200 000) mit wiederkehrenden Einheiten der Formel (III):

$$[-(-F-S-)_c-(-F-SO-)_d-] \qquad (III)$$

in der F unabhängig voneinander für einfache oder direkt über para,- meta-oder orthoverknüpfte Arylensysteme mit 6 bis 18 C-Atomen steht, und vorzugsweise Phenylen, Naphthylen oder Biphenylen darstellt, wobei die Summe aus c + d gleich 1 ist, mit der Maßgabe, daß d stets $\geq$ 0,70 ist.

Besonders geeignet sind lineare und verzweigte Polyphenylene (Mw: 4 000-200 000) mit wiederkehrenden Einheiten der Formel (IV):

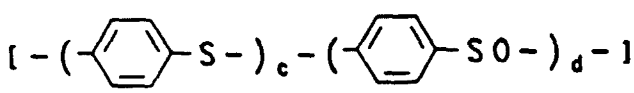 (IV)

wobei c und d wie oben definiert sind.

Die Herstellung der Polyarylensulfoxide (B) kann nach dem in der noch nicht veröffentlichten deutschen Patentanmeldung P 43 14 737.2, "Zweistufige Oxidation von Polyarylensulfiden" vom 4. Mai 1993, beschriebenen Verfahren erfolgen, auf das hiermit Bezug genommen wird.

Verwendbare Polyarylensulfide (C) für die Mischungen gemäß der Erfindung sind lineare und/oder verzweigte Polyarylene (Mw: 4 000 - 200 000) mit wiederkehrenden Einheiten der Formel (V):

$$[-G-S-] \qquad (V)$$

in der G für einfache oder direkt über para-, meta- oder ortho-verknüpfte Arylensysteme mit 6 bis 18 C-Atomen steht, vorzugsweise für Phenylen, Naphthylen oder Biphenylen.

Besonders geeignet ist lineares und verzweigtes Polyphenylensulfid (Mw: 4 000 - 200 000) mit wiederkehrenden Einheiten der Formel (VI):

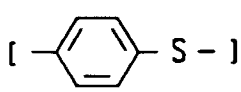 (VI)

das kommerziell erhältlich ist.

Die Mischungen gemäß der Erfindung können übliche Additive enthalten, beispielsweise thermische Stabilisatoren, UV-Stabilisatoren, Antistatika, Flammschutzmittel, Farbstoffe, Pigmente, anorganische und/oder organische Füllstoffe sowie Gleitmittelzusätze wie Molybdänsulfid oder Graphit.

Die mittlere Teilchengröße ($D_{50}$-Wert) der eingesetzten Polymere (A) bis (C) liegt im allgemeinen im Bereich von $3*10^{-6}$ bis $500*10^{-6}$ m, vorzugsweise $5*10^{-6}$ bis $300*10^{-6}$ m und insbesondere $5*10^{-6}$ bis $200*10^{-6}$ m.

Die Mischungen gemäß der Erfindung werden im allgemeinen aus den Einzelkomponenten in hierfür geeigneten Mischern hergestellt. Aus ihnen können nach verschiedenen bekannten Verfahren Formkörper hergestellt werden, die homogen sind und aufgrund ihrer Hitzebeständigkeit für Anwendungsgebiete geeignet sind, bei denen eine

hohe Wärmeformbeständigkeit gefordert wird. Beispielsweise sind sie für den Einsatz im Motorenbau und in elektrischen und elektronischen Anlagen hervorragend geeignet. Bekannt ist beispielsweise das "Schmoren" am stromführenden Pol von elektrischen Steckkupplungen, das häufig zu einer Zerstörung der Teile führt und auch Ursache für das Entstehen von Bränden sein kann. Formkörper, die aus den Mischungen gemäß der Erfindung hergestellt sind, weisen diese Nachteile nicht auf.

Die Bedingungen bei der Formgebung liegen bei den hierfür geeigneten verschiedenen Verfahren auf einem Niveau. In jedem Fall werden die zu verarbeitenden Mischungen Temperaturen ausgesetzt, die oberhalb der Glasübergangstemperatur des jeweils eingesetzten Polyarylensulfons liegen.

Übliche Temperaturen sind hierbei 280 bis 450°C, vorzugsweise 290 bis 450°C und insbesondere 300 bis 425°C. Die zur Formgebung erforderlichen spezifischen Pressdrücke betragen im allgemeinen $\geq 10^3$ kPa (10 bar), vorzugsweise $\geq 5 \times 10^3$ kPa (50 bar) und insbesondere $\geq 10^4$ kPa (100 bar).

Verfahren, die zur Formgebung dienen, sind das Heißpressen, das Transfer Moulding, das Kaltpreß- und das Sinterverfahren.

Bei dem Heißpreßverfahren wird die Mischung heiß verpreßt, während bei dem Kaltpreßverfahren der spezifische Druck auf die Mischung in einer kalten Form gegeben wird, die anschließend in geeigneter Weise auf die erforderliche Temperatur gebracht wird.

Bei dem Transfer Moulding Verfahren wird die Mischung in der entsprechenden Preßform auf die erforderliche Temperatur erhitzt und anschließend mit Hilfe einer unter Raumtemperatur befindlichen Presse verpreßt.

Bei dem Sinterverfahren wird zuerst ein Preßling bei Raumtemperatur hergestellt und dieser anschließend gesintert.

Beispiele:

Als thermoplastisch nicht verarbeitbares Polyphenylensulfon (A) wurde das in der oben aufgeführten deutschen Patentanmeldung P 43 14 738.0 nach Beispiel 2 hergestellte Produkt verwendet.

Als Polyphenylensulfoxid (B) wurde das in der oben aufgeführten deutschen Patentanmeldung P 43 14 737.2 nach Beispiel 1 hergestellte Produkt verwendet.

Das eingesetzte Polyphenylensulfid (C) besaß eine Dichte von 1,35 $g/cm^3$.

Die verwendeten Polymere (A), (B) und (C) hatten jeweils eine mittlere Korngröße ($D_{50}$-Wert) von ca. $20 \cdot 10^{-6}$ m und wurden in einem Mischer der Marke Diosna (Hersteller: Dierks & Söhne, Osnabrück, Bundesrepublik Deutschland) gemischt.

Tabelle 1 :

| | Polyphenylen sulfon (A) [Gew.-%] | Polyphenylen sulfoxid (B) [Gew.-%] | Polyphenylensulfid (C) [Gew.-%] |
|---|---|---|---|
| Beispiel 1 | 75 | 25 | - |
| Beispiel 2 | 80 | 10 | 10 |
| Beispiel 3 | 90 | - | 10 |
| Beispiel 4 | 95 | - | 5 |
| Beispiel 5 (Vergl.-Bsp. 1) | 100 | - | - |
| Beispiel 6 (Vergl.-Bsp. 2) | - | 100 | - |

Die Mischungen der Beispiele 1 bis 4 sowie die Polymere der Beispiele 5 und 6 wurden nach verschiedenen Verfahren wie folgt verarbeitet.

Transfer Moulding:

Die Polymerpulver bzw. Pulvermischungen wurden in einer zylindrischen Form mit 16 mm Innendurchmesser, die durch zwei Vollzylinder verschlossen wurde, in einem Heizschrank, Typ K 750/1 der Fa. Heraeus (Hanau, Bundesrepublik Deutschland), 2 Stunden lang aufgeheizt. Die Einwaage betrug ca. 8,25 g. Nach der Aufheizzeit wurde die gefüllte Form sofort heiß unter einer bei Raumtemperatur befindlichen 10 t-Presse (Eigenbau, Hydraulikzylinder von FAG Kugelfischer, Erlangen, Bundesrepublik Deutschland) verpreßt. Spezifischer Preßdruck $15 \times 10^4$ kPa(1500 bar), Preßzeit 30 min, Druckrelaxationszeit (Entspannung) 30 min. Anschließend wurden die Formkörper entformt und auf sichtbare Risse hin überprüft. Alle erhaltenen Produkte waren plastifiziert, wiesen keine sichtbaren Risse auf und konnten mit einwandfreiem Ergebnis verschiedenen mechanischen Bearbeitungen (z.B. Sägen, Bohren, Fräsen, Drehen) unterzogen werden.

Tabelle 2:

| Formkörper durch Transfer Moulding | Ofentemperatur [°C] | Dichte des Formkörjers g/ $cm^3$ | Eigenschaften bei mechanischer Bearbeitung |
|---|---|---|---|
| Beispiel 1<br>Beispiel 2<br>Beispiel 3<br>Beispiel 4 | 360<br>360<br>360<br>360 | 1,43<br>1,44<br>1,44<br>1,45 | keine Rißbildung |
| Beispiel 5 (Vergl.-Bsp. 1) | 400 | 1,43 | Auftreten von Rissen, Zerfall der Formkörper |
| Beispiel 6 (Vergl.-Bsp. 2) | 260 | 1,43 | keine Rißbildung |

Sintern:

Von den Polymeren (A) und (B) [Vergl.-Beisp. 1 und 2) sowie den Mischungen 1 bis 4 [Beisp. 1 bis 4) gemäß Tabelle 1 wurden in der zylindrischen Form wie beim Transfer Moulding, jedoch ohne den Heizvorgang, durch Pressen Formkörper erhalten (Kaltpreßlinge). Diese wurden anschließend in dem Heizschrank K 750/1 der Fa. Haereus unter Luftatmosphäre unter folgenden Bedingungen gesintert:

a) Aufheizen mit konstanter Heizrate von Raumtemperatur auf Sintertemperatur (siehe Tabelle 3), Dauer des Aufheizvorganges: 8 Stunden;
b) 4 Stunden konstantes Halten der Sintertemperatur;
c) Abkühlen mit konstanter Rate von Sintertemperatur auf Raumtemperatur. Dauer des Abkühlvorganges: 8 Stunden.

Tabelle 3 :

| Formkörper, gesintert | Sintertemperatur [°C] | Dichte des erhaltenen Formkörgers g/$cm^3$ |
|---|---|---|
| Beispiel 1 | 360 | 1,08 |
| Beispiel 2 | 360 | 1,09 |
| Beispiel 3 | 360 | 1,11 |
| Beispiel 4 | 360 | 1,12 |
| Beispiel 5 (Vergl.-Bsp. 1) | 360 | 1,10 |
| Beispiel 6 (Vergl.-Bsp. 2) | 260 | 1,10 |

Alle erhaltenen Produkte waren plastifiziert und wiesen keine sichtbaren Risse auf. Eine anschließend durchgeführte mechanische Bearbeitung der Probekörper (z.B. Sägen, Bohren, Fräsen, Drehen) verlief einwandfrei.

Thermoanalytische Messungen:

Von den Ausgangsmaterialien bzw. Mischungen, den Kaltpreßlingen, den gesinterten Formteilen und den durch Transfer Moulding hergestellten Formkörpern wurden DSC-Analysen durchgeführt:

DSC-Meßgerät: DSC-2C; Hersteller: Perkin Elmer, Überlingen, Bundesrepublik Deutschland

Meßbedingungen: Meßatmosphäre: Stickstoff
Aufheizrate/Abkühlrate: 20°C/min Temperaturprogramm
(Beispiele 1-4, Vergl.-Beisp. 1,):
1. Heizen von 50°C auf 380°C,
Abkühlen von 380°C auf 50°C,
2. Heizen von 50°C auf 380°C.
Temperaturprogramm (Vergl.-Beisp. 2):
1. Heizen von 50°C auf 300°C,
Abkühlen von 300°C auf 50°C,

2. Heizen von 50°C auf 300°C.

Tg bezeichnet die Glasübergangstemperatur.

Zusammensetzung gemäß Beispiel 1:

Die Pulvermischung und der Kaltpreßling zeigten beim 1. Heizen eine Tg bei ca. 240°C (Polyphenylensulfoxid) sowie den Beginn einer exothermen Reaktion ab ca. 300°C (Onset-DSC, Polyphenylensulfoxid-Zersetzung). Beim 2. Heizen war nur noch eine Tg bei ca. 350°C (Polyphenylensulfon) zu erkennen.
Das gesinterte Formteil und das Transfer Moulding Formteil zeigten sowohl beim 1. und 2. Heizen nur eine Tg bei ca. 350°C (Polyphenylensulfon). Bei den Abkühlvorgängen waren keine thermischen Effekte zu beobachten.

Zusammensetzung gemäß Beispiel 2:

Die Pulvermischung und der Kaltpreßling zeigten beim 1. Heizen jeweils eine Tg bei ca.100°C (Polyphenylensulfid) und ca. 240°C (Polyphenylensulfoxid) und einen Schmelzpeak bei ca. 290°C (Polyphenylensulfid), sowie den Beginn einer exothermen Reaktion ab 300°C (Onset-DSC, Polyphenylensulfoxid-Zersetzung). Beim 2. Heizen war nur noch eine Tg bei 350°C (Polyphenylensulfon) zu erkennen.
Das gesinterte Formteil und das Transfer Moulding Formteil zeigten sowohl beim 1. und 2. Heizen nur eine Tg bei ca. 350°C (Polyphenylensulfon).
Bei den Abkühlvorgängen waren keine thermischen Effekte zu beobachten.

Zusammensetzung gemäß Beispiel 3:

Die Pulvermischung und der Kaltpreßling zeigten beim 1. und 2. Heizen einen Schmelzpeak bei ca. 290°C, sowie eine Tg bei ca. 100°C (Polyphenylensulfid) und ca. 350°C (Polyphenylensulfon). Beim Abkühlvorgang war ein Rekristallisationspeak bei ca. 180°C (Polyphenylensulfid) zu beobachten.
Das gesinterte Formteil und das Transfer Moulding Formteil zeigten sowohl beim 1. und 2. Heizen nur eine Tg bei ca. 350°C (Polyphenylensulfon). Bei den beiden Abkühlvorgängen waren keine thermischen Effekte zu beobachten.

Zusammensetzung gemäß Beispiel 4:

Diese Polymermischung zeigte das gleiche Verhalten wie die Mischung von Beispiel 3.

Zusammensetzung gemäß Vergleichsbeispiel 1:

Bei der Pulvermischung, dem Kaltpreßling, dem gesinterten Formteil und dem Transfer Moulding Formteil war beim 1. und 2. Heizen eine Tg bei ca. 350°C (Polyphenylensulfon) zu erkennen.
Bei den Abkühlvorgängen waren keine thermischen Effekte zu beobachten.

Zusammensetzung gemäß Vergleichsbeispiel 2:

Bei der Pulvermischung, dem Kaltpreßling, dem gesinterten Formteil und dem Transfer Moulding Formteil ist beim 1. und 2. Heizen eine Tg bei 240°C (Polyphenylensulfoxid) zu erkennen.
Bei den Abkühlvorgängen waren keine thermischen Effekte zu beobachten.

Vergleichsbeispiel 3:

Als Vergleichsmaterial wurde ®Fortron X 0205/20 µm, ein Polyphenylensulfid der Hoechst AG, Frankfurt/Main, Bundesrepublik Deutschland, eingesetzt. Es wurde das Polymerpulver im unverarbeiteten Zustand untersucht.
Das untersuchte Pulver zeigte beim 1. und 2. Heizen eine Tg bei ca. 100°C sowie einen Schmelzpeak bei ca. 290°C. Beim Abkühlvorgang war ein Rekristallisationspeak bei ca. 180°C zu beobachten.

**Patentansprüche**

**1.** Polymermischung aus

(A) 33 bis 99 Gew.-% mindestens eines thermoplastisch nicht verarbeitbaren Polyarylensulfons
(B) 1 bis 67 Gew.-% mindestens eines Polyarylensulfoxids
und/oder
(C) 1 bis 67 Gew.-% eines Polyarylensulfids,

wobei die Summe der Komponenten (A), (B) und (C) stets 100 Gew.-% beträgt.

**2.** Mischung nach Anspruch 1, dadurch gekennzeichnet, daß der Anteil der Komponente (B) vorzugsweise 5 bis 50 Gew.-%, insbesondere 15 bis 40 Gew.-%, und der Anteil der Komponente (C) 1 bis 40 Gew.-%, vorzugsweise 1 bis 25 Gew.-% beträgt, wobei die Summe der Komponenten (A), (B) und (C) stets 100 Gew.-% beträgt.

**3.** Mischung nach Anspruch 1 oder 2, dadurch gekennzeichnet, daß als Komponente (A) lineare und/oder verzweigte Polyarylene (Mw: 4 000-200 000) eingesetzt werden, die aus wiederkehrenden Einheiten der Formel (I)

$$[-(-E-S-)_a-(-E-SO_2-)_b-] \qquad (I)$$

zusammengesetzt sind, wobei E unabhängig voneinander für einfache oder direkt über para-, meta- oder ortho-verknüpfte Arylensysteme mit 6 bis 18 C-Atomen steht und vorzugsweise Phenylen, Naphthylen oder Biphenylen darstellt, wobei die Summe aus a + b gleich 1 ist, mit der Maßgabe, daß b stets ≥ 0,65 ist.

**4.** Mischung nach Anspruch 3, dadurch gekennzeichnet, daß als Komponente (A) Polyarylene mit wiederkehrenden Einheiten der Formel (II)

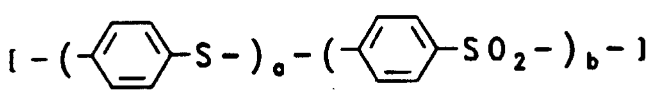
(II)

eingesetzt werden.

**5.** Mischung nach einem oder mehreren der Ansprüche 1 bis 4, dadurch gekennzeichnet, daß als Komponente (B) lineare und/oder verzweigte Polyarylene (Mw: 4 000 - 200 000) eingesetzt werden, die aus wiederkehrenden Einheiten der Formel (III)

$$[-(-F-S-)_c-(-F-SO-)_d-] \qquad (III)$$

zusammengesetzt sind, wobei F unabhängig voneinander für einfache oder direkt über para-, meta- oder ortho-verknüpfte Arylensysteme mit 6 bis 18 C-Atomen steht, und vorzugsweise Phenylen, Naphthylen oder Biphenylen darstellt, wobei die Summe aus c + d gleich 1 ist, mit der Maßgabe, daß d stets ≥ 0,70 ist.

**6.** Mischung nach Anspruch 5, dadurch gekennzeichnet, daß als Komponente (B) Polyarylene mit wiederkehrenden Einheiten der Formel (IV)

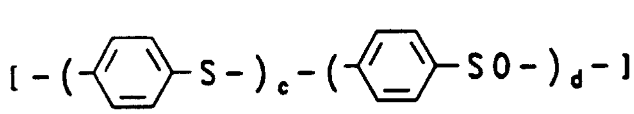
(IV)

eingesetzt werden.

**7.** Mischung nach einem oder mehreren der Ansprüche 1 bis 6, dadurch gekennzeichnet, daß als Komponente (C) lineare und/oder verzweigte Polyarylene (Mw: 4 000 - 200 000) eingesetzt werden, die aus wiederkehrenden Einheiten der Formel (V)

[-G-S-] (V)

zusammengesetzt sind, wobei G für einfache oder direkt über para-, meta- oder ortho-verknüpfte Arylensysteme mit 6 bis 18 C-Atomen steht, vorzugsweise für Phenylen, Naphthylen oder Biphenylen.

**8.** Mischung nach Anspruch 7, dadurch gekennzeichnet, daß als Komponente (C) Polyarylene (Mw: 4 000 bis 200 000) mit wiederkehrenden Einheiten der Formel (VI)

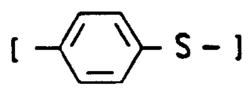

(VI)

eingesetzt werden.

**9.** Mischung nach einem oder mehreren der Ansprüche 1 bis 8, dadurch gekennzeichnet, daß sie zusätzlich thermische Stabilisatoren, UV-Stabilisatoren, Antistatika, Flammschutzmittel, Farbstoffe, Pigmente, anorganische und/oder organische Füllstoffe enthalten.

**10.** Mischung nach einem oder mehreren der Ansprüche 1 bis 9, dadurch gekennzeichnet, daß die mittlere Korngröße der einzelnen Mischungsbestandteile (A), (B) und (C) im Bereich von $3*10^{-6}$ bis $500*10^{-6}$ m, vorzugsweise $5*10^{-6}$ bis $300*10^{-6}$ m und insbesondere $5*10^{-6}$ bis $200*10^{-6}$ m liegt.

**11.** Verwendung der Polymermischungen nach einem oder mehreren der Ansprüche 1 bis 10 zur Herstellung von Formkörpern mittels Heißpressen, Transfer Moulding, Kaltpreß- oder Sinterverfahren.

**12.** Verwendung nach Anspruch 11, dadurch gekennzeichnet, daß die Herstellung der Formkörper bei Temperaturen von 280 bis 450°C, vorzugsweise von 290 bis 450°C und insbesondere von 300 bis 425°C erfolgt, wobei die spezifischen Preßdrücke $\geq 10^3$ kPa (10 bar), vorzugsweise $\geq 5 \times 10^3$ kPa (50 bar) und insbesondere $\geq 10^4$ kPa (100 bar) betragen.

## Claims

**1.** A polymer mixture of

(A) from 33 to 99% by weight of at least one nonmelt-processable polyarylene sulfone
(B) from 1 to 67% by weight of at least one polyarylene sulfoxide
and/or
(C) from 1 to 67% by weight of a polyarylene sulfide,

where the sum of the components (A), (B) and (C) is always 100% by weight.

**2.** A mixture as claimed in claim 1, wherein the proportion of the component (B) is preferably from 5 to 50% by weight, in particular from 15 to 40% by weight, and the proportion of the component (C) is from 1 to 40% by weight, preferably from 1 to 25% by weight, where the sum of the components (A), (B) and (C) is always 100% by weight.

**3.** A mixture as claimed in claim 1 or 2, wherein the component (A) used consists of linear and/or branched polyarylenes (Mw: 4000 - 200,000) which are composed of recurring units of the formula (I)

$$[-(-E-S-)_a-(-E-SO_2-)_b-] \quad (I),$$

where E are, independently of one another, simple or directly para-, meta- or ortho-linked arylene systems having from 6 to 18 carbon atoms, preferably phenylene, naphthylene or biphenylene, where the sum of a+b is equal to

1, with the proviso that b is always ≥ 0.65.

**4.** A mixture as claimed in claim 3, wherein the component (A) used consists of polyarylenes having recurring units of the formula (II)

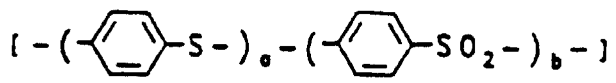

(II).

**5.** A mixture as claimed in one or more of claims 1 to 4, wherein the component (B) used consists of linear and/or branched polyarylenes (Mw: 4000-200,000) which are composed of recurring units of the formula (III)

$$[-(-F-S-)_c-(-F-SO-)_d-] \quad (III),$$

where F are, independently of one another, simple or directly para-, meta- or ortho-linked arylene systems having from 6 to 18 carbon atoms, preferably phenylene, naphthylene or biphenylene, where the sum of c+d is equal to 1, with the proviso that d is always ≥ 0.70.

**6.** A mixture as claimed in claim 5, wherein the component (B) used consists of polyarylenes having recurring units of the formula (IV)

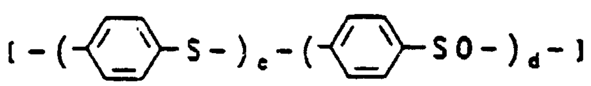

(IV).

**7.** A mixture as claimed in one or more of claims 1 to 6, wherein the component (C) used consists of linear and/or branched polyarylenes (Mw: 4000-200,000) which are composed of recurring units of the formula (V)

$$[-G-S-] \quad (V),$$

where G is a simple or directly para-, meta- or ortho-linked arylene system having from 6 to 18 carbon atoms, preferably phenylene, naphthylene or biphenylene.

**8.** A mixture as claimed in claim 7, wherein the component (C) used consists of polyarylenes (Mw: 4000 to 200,000) having recurring units of the formula (VI)

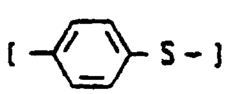

(VI).

**9.** A mixture as claimed in one or more of claims 1 to 8, which additionally contains thermal stabilizers, UV stabilizers, antistatic agents, flame retardants, dyes, pigments, inorganic and/or organic fillers.

**10.** A mixture as claimed in one or more of claims 1 to 9, wherein the mean particle size of the individual constituents (A), (B) and (C) is in the range from $3\times10^{-6}$ to $500\times10^{-6}$ m, preferably from $5\times10^{-6}$ to $300\times10^{-6}$ m and in particular $5\times10^{-6}$ to $200\times10^{-6}$ m.

**11.** The use of the polymer mixtures as claimed in one or more of claims 1 to 10 for producing shaped bodies by means of hot pressing, transfer molding, cold pressing or sintering.

**12.** The use as claimed in claim 11, wherein the shaped bodies are produced at temperatures of from 280 to 450°C, preferably from 290 to 450°C and in particular from 300 to 425°C, with the specific pressing pressures being ≥ $10^3$ kPa (10 bar), preferably ≥ $5\times10^3$ kPa(50 bar) and in particular ≥ $10^4$ kPa (100 bar) .

**Revendications**

**1.** Mélange de polymères constitué de :

(A) 33 à 99% en poids d'au moins un poly(sulfone d'arylène) thermoplastique non transformable,
(B) 1 à 67% en poids d'au moins un poly(sulfoxyde d'arylène)
et/ou
(C) 1 à 67% en poids d'un poly(sulfure d'arylène),

dans lequel la somme des composants (A), (B) et (C) vaut toujours 100% en poids.

**2.** Mélange selon la revendication 1, caractérisé en ce que la proportion du composant (B) vaut de préférence de 5 à 50% en poids, en particulier de 15 à 40% en poids, et la proportion du composant (C) vaut de 1 à 40% en poids, de préférence de 1 à 25% en poids, ce par quoi la somme des composants (A), (B) et (C) vaut toujours 100% en poids.

**3.** Mélange selon la revendication 1 ou 2, caractérisé en ce que comme composant (A), on utilise des polyarylènes linéaires et/ou ramifiés (Mw: 4000-200 000), qui sont composés d'unités répétitives de formule (I),

$$[-(-E-S-)_a-(-E-SO_2-)_b-] \qquad (I)$$

dans laquelle E représente, indépendamment l'un de l'autre, des systèmes d'arylène simples ou reliés directement en para, méta ou ortho, comptant de 6 à 18 atomes de carbone, et représente de préférence un phénylène, naphtylène ou biphénylène, la somme de a+b étant égale à 1, avec la condition que b soit toujours ≥ 0,65.

**4.** Mélange selon la revendication 3, caractérisé en ce que comme composant (A), on utilise des polyarylènes comportant des unités répétitives de formule (II)

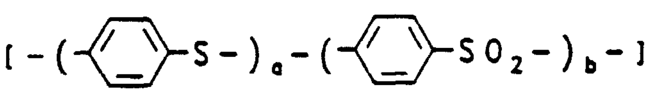

(II)

**5.** Mélange selon l'une ou plusieurs des revendications 1 à 4, caractérisé en ce que comme composant (B), on utilise des polyarylènes linéaires et/ou ramifiés (Mw: 4000-200 000), qui sont composés d'unités répétitives de formule (III)

$$[-(-F-S-)_c-(-F-SO-)_d-] \qquad (III)$$

dans laquelle F représente, indépendamment l'un de l'autre, des systèmes d'arylène simples ou reliés directement en para, méta ou ortho, comptant de 6 à 18 atomes de carbone, et présente de préférence un phénylène, naphtylène ou biphénylène, la somme de c+d étant égale à 1, avec la condition que d soit toujours ≥ 0,70.

**6.** Mélange selon la revendication 5, caractérisé en ce que comme composant (B), on utilise des polyarylènes comportant des unités répétitives de formule (IV)

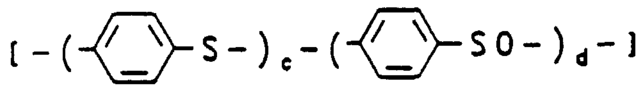

(IV)

**7.** Mélange selon l'une ou plusieurs des revendications 1 à 6, caractérisé en ce que comme composant (C), on utilise des polyarylènes linéaires et/ou ramifiés (Mw: 4000-200 000) qui sont composés d'unités répétitives de formule (V),

[-G-S-] (V)

dans laquelle G représente des systèmes d'arylène simples ou reliés directement en para, méta ou ortho, comptant de 6 à 18 atomes de carbone, de préférence un phénylène, naphtylène ou biphénylène.

**8.** Mélange selon la revendication 7, caractérisé en ce que comme composant (C), on utilise des polyarylènes (Mw: 4000-200 000) comportant des unités répétitives de formule (VI)

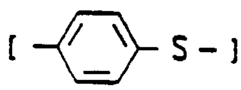

(VI)

**9.** Mélange selon l'une ou plusieurs des revendications 1 à 8,caractérisé en ce qu'il contient en outre des stabilisants thermiques, des stabilisants vis-à-vis des UV, des agents antistatiques, des agents de protection contre les flammes, des colorants, des pigments, des charges inorganiques et/ou organiques.

**10.** Mélange selon l'une ou plusieurs des revendications 1 à 9, caractérisé en ce que la taille moyenne des particules des composants individuels (A), (B) et (C) du mélange est comprise dans la plage de $3*10^{-6}$ à $500*10^{-6}$ m, de préférence de $5*10^{-6}$ à $300*10^{-6}$ m et en particulier de $5*10^{-6}$ à $200*10^{-6}$ m.

**11.** Utilisation des mélanges de polymères selon l'une ou plusieurs des revendications 1 à 10 pour la fabrication de corps moulés par pressage à chaud, par moulage par transfert, par un procédé de pressage à froid ou de frittage.

**12.** Utilisation selon la revendication 11, caractérisée en ce que la fabrication des corps moulés s'effectue à des températures de 280 à 450°C, de préférence de 290 à 450°C et en particulier de 300 à 425°C, les pressions spécifiques de moulage étant $\geq 10^3$ kPa (10 bars), de préférence $\geq 5*10^3$ kPa (50 bars) et en particulier $\geq 10^4$ kPa (100 bars).